Europäisches Patentamt

(19) **European Patent Office**

Office européen des brevets

(11) Publication number: **0 056 678**
**A1**

(12) **EUROPEAN PATENT APPLICATION**

(21) Application number: **82200066.7**

(22) Date of filing: **20.01.82**

(51) Int. Cl.³: **B 29 B 1/08**
**B 29 H 1/10**

(30) Priority: **20.01.81 NL 8100246**

(43) Date of publication of application:
**28.07.82 Bulletin 82/30**

(84) Designated Contracting States:
**AT BE CH DE FR GB IT LI LU NL SE**

(71) Applicant: **NEDERLANDSE CENTRALE ORGANISATIE
VOOR TOEGEPAST-NATUURWETENSCHAPPELIJK
ONDERZOEK
Juliana van Stolberglaan 148
NL-2595 CL The Hague(NL)**

(72) Inventor: **den Otter, Johan Leonard
Veurse Straatweg 213
2264 EH Leidschendam(NL)**

(74) Representative: **Lobatto, Jacob Louis, Drs.
Octrooi- en Merkenbureau Lobatto Postbus 1017
Pastoor Buyslaan 40
NL-2242 RL Wassenaar(NL)**

(54) **Mixing apparatus.**

(57) Mixing apparatus for highly viscous materials comprising a mixing chamber and at least one rotor, driven by a motor, wherein the active surfaces are at least partially roughened. The roughening is preferably within the range of 0.5 μm to 20 μm.

EP 0 056 678 A1

Mixing apparatus

The invention relates to a mixing apparatus.More in particular the invention relates to a mixing apparatus for highly viscous materials, such as for example rubber and plastics, and certain fats and fatty acids.

Hitherto it has been customary in industry to mix highly viscous materials, such as for example natural and synthetic polymers, if desired together with additives such as soot, carbon black, clay, vulcanization starters and the like, in an apparatus suitable for that purpose.Such an apparatus usually comprises a confined space provided with rotating elements, such as Banbury mixers and extruders, for mixing the components and thus obtaining a homogeneous product, or alternatively to cause certain changes in the material present, such as for example plasticizing rubber and PVC mixtures.In many cases better mixing is accompanied by a better quality of the final product, which is of practical importance.Better mixing will also allow a better temperature control of the extrudate when extruding later on.

The mixers and mixing compartments of extruders as presently used customarily have a smooth, usually polished wall. The rubber and PVC mixtures processed therein usually do not attain final products of best quality.Moreover it has appeared to be difficult to achieve reproducible mixing, thus causing variations in quality to occur in the final product.

The invention provides a mixing apparatus mitigating or avoiding the above mentioned disadvantages, providing better plasticizing and homogenation of materials treated therein.

Thus the invention relates to a mixing apparatus provided The invention relates to a mixing apparatus provided with a mixing chamber comprising at least one rotor, driven by a motor, wherein the active surfaces are at least partially roughened.More in particular the wall of the mixing chamber may be at least partially roughened and/or the wall of any rotor present may be at least partially roughened.More specifically the active surfaces have a roughness in the range of more than 0.25 µm up to 100 µm, whereby a substantial saving in energy is obtained.

The wall of the mixing chamber is usually stationary, but the wall may be rotating, provided that the inner wall is not rotating synchronous in the same direction of rotation as any rotor present.The roughening required should exceed the natural roughness caused by normal machining of metal, which latter amounts to about 0.25 µm.The type of roughening required will of course depend on the material to be treated, but should not be so high that the mixing apparatus is no longer self emptying.Without additional precautions roughening in the range of more than 0.25 µm up to 100 µm will provide the desired improvements, such as reproducible mixing of the components and a substantial decrease in the consumption of energy.Thus when using a roughening of the inner wall of the mixing chamber of the mixing apparatus of more than 100 µm, this roughening is distributed over more or less regularly distributed grooves running substantially coaxial with the axes of the rotors, but this latter system is much more complicated to manufacture.It is always necessary that the roughening has a component perpendicular to the direction of rotation of each rotor, regardless the degree of roughening.If desired any rotor present may be roughened, though such roughening should be fairly limited in degree in order to prevent the risk of the formation of a permanently adhering layer of the material to be treated in and over the interstices thus formed.

Though the simplest form will usually consist in roughening of the complete inner wall of the mixing chamber, the desired results are also obtained by using a partially roughened inner wall of the mixing chamber.It is of importance that the roughening of the inner wall of the mixing chamber is at least present in those areas in which the possibility of slip is highest, that is those areas of the inner wall of the mixing chamber.which are located closest to the rotors.For obtaining satisfactory results it is desirable that these last-mentioned areas are toughened for 50% up to 100%, though in some cases satisfactory results can still be obtained at lower percentages, depending on the material to be treated.

Though it is always necessary that the roughening has a component perpendicular to the direction of rotation of each rotor and it is preferable that the roughening is mainly perpendicular to the direction of rotation of the rotors, for large degrees of roughness a component in the direction parallel to the direction of rotation is necessary to ascertain that the device remains self-emptying.

It has been found that a mixing apparatus according to the invention will provide final products of good quality in a reproducible manner, thus avoiding variations in quality. For most highly viscous materials an upper limit of the roughening of 20 $\mu$m has been found to be adequate, while as a lower limit 0.5 $\mu$m is preferred.

The walls and rotors of the mixing apparatis according to the invention usually consist of a metal or a metal-alloy, but other wear-resistent materials may be used as well.A condition for these materials is, that they are not or negligibly deformable under the conditions of use, that is that they will maintain the said properties also at increased temperatures, such as occur customary during mixing.

CLAIMS:

1. Mixing apparatus for highly viscous materials comprising a mixing chamber and at least one rotor, driven by a motor, wherein the active surfaces are at least partially roughened.

2. Mixing apparatus according to claim 1, wherein the active surface roughened is the inner wall of the mixing chamber.

3. Mixing chamber according to claim 1 or 2, wherein the active surfaces roughened are the surfaces of at least one rotor.

4. Mixing apparatus according to any one of claims 1, 2 or 3, wherein the roughening of the active surfaces is in the range of more than 0.25 $\mu$m up to 100 $\mu$m.

5. Mixing apparatus according to claim 1 or 2, wherein only the areas of the inner wall of the mixing chamber closest to the rotor surfaces are roughened.

6. Mixing apparatus according to claim 5, wherein 50-100% of these areas are roughened.

7. Mixing apparatus according to any one of the preceding claims, wherein the roughening has at least one component perpendicular to the direction of rotation of the rotors.

8. Mixing apparatus according to claim 7, wherein the roughening consists of protrusions at or excisions into the inner wall of the mixing chamber.

9. Mixing apparatus according to any one of the preceding claims, wherein the roughening of the active surfaces is in the range of at least 0.5 $\mu$m up to 20 $\mu$m.

**European Patent Office**

## EUROPEAN SEARCH REPORT

## DOCUMENTS CONSIDERED TO BE RELEVANT

| Category | Citation of document with indication, where appropriate, of relevant passages | Relevant to claim |
|---|---|---|
| X | <u>GB - A - 552 515</u> (BRIDGE)<br><br>* the whole document *<br><br>-- | 1-9 |
| X | <u>GB - A - 330 953</u> (F. KEMPTER)<br><br>* the whole document *<br><br>----- | 1,4 |

**CLASSIFICATION OF THE APPLICATION (Int. Cl. 3)**

B 29 B 1/08
B 29 H 1/10

**TECHNICAL FIELDS SEARCHED (Int.Cl 3)**

B 29 B 1/00
B 29 H 1/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 22.04.1982 | KUSARDY |

EPO Form 1503.1  06.78